Europäisches Patentamt

European Patent Office

Office européen des brevets

(11) Publication number: **0 451 428 A1**

# EUROPEAN PATENT APPLICATION

(21) Application number: **90830166.6**

(22) Date of filing: **13.04.90**

(51) Int. Cl.⁵: **G11B 33/04**

(43) Date of publication of application:
**16.10.91 Bulletin 91/42**

(84) Designated Contracting States:
**AT BE CH DE DK ES FR GB GR IT LI LU NL SE**

(71) Applicant: **EVER BRIGHT ELECTRONICS FACTORY CORP.**
**No. 1, Lane 366, Sec.2, Chung Shan Road Chungo, Taipei Hsien(TW)**

(72) Inventor: **I-Jen, Wang**
**No. 1, Lane 366, Sec. 2, Chung Shan Road Chungho, Taipei Hsien(TW)**

(74) Representative: **Righetti, Giuseppe**
**Bugnion S.p.A. Via Carlo Farini, 81**
**I-20159 Milano(IT)**

(54) New structure of disc keeping box.

(57) A box for keeping discs consists of an outer case (1) and an inner drawer (2), the outer case (1) is constructed by a top board, a bottom board, a left board, a right board and a rear board, each two adjacent boards (10) is assembled by tenons (11) and mortises (12) so that neither a tool nor nails or bolts is needed for assembling. On the inner walls of the left board (10a) and the right board (10a), there is a sliding board (40) having a groove (41) which fits with the dimensions and the shape of the sliding rail (25) on each of the side wall of the inner box and the sliding rail (25) is capable to slide to and fro in the groove (41) of the sliding board (40). At the corner of the outer case (1), there are several slots (16), as a result, by using certain clips (50a, 50b), two or several outer cases (1) can get together and form a whole piece.

F I G. 4

Nowadays, as the communication technology flourish developed and the information of knowledge has become enormous, the computer has been a necessary tool for all occupations. As the information data increasing as time goes on, more and more discs for data storage to be reserved.

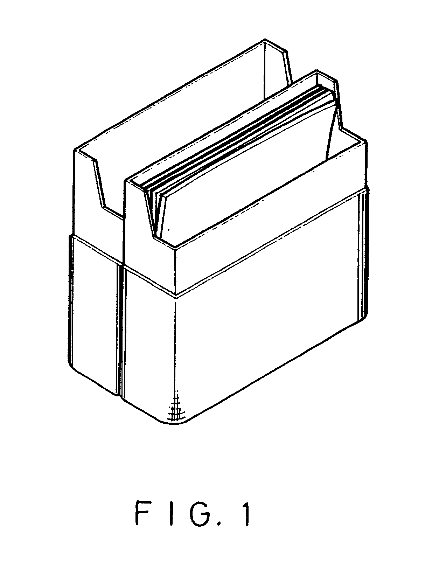

The discs used for data storage are usually kept in the packing boxes as shown in Figure 1. It is not only rough and undurable, but also cannot keep the discs from pollution of dust.

Almost all of the disc keeping box are made of plastics boards and the outer cases are formed by means of screw or adhesive glue. Thus, it not only occupies more space, but also be difficult to be assembled. Besides, its inner drawer slides in and out of the outer case by means rollers hold in the groove. However, after a period of time, the shafts of the rollers should be bent by the weight of drawers. As a result, the inner box should be choked up by the rollers and gooves. Furthermore, as the time being, as the discs become more and more than before and it might be in need of two or more boxes for keeping discs. The boxes cannot be combined into a whole piece and are scattered around and make the space of the office in a mess. This causes the inconvenience of using the discs.

An object of this invention is to provide a disc keeping box which can be assembled within a very short time without tools or screws or any other fasteners. Especially, its drawer is slided without rollers, consequently no matter what a long time of use, it will never make a roller shaft broken and cause the box be choked.

According to the disc keeping box of the present invention, it can be disassembled into pieces, as a result, it saves the space and easy to be assembled to form the outer case and the drawer, in addition, the outer cases can be linked into a whole piece, it is another object of this invention.

The construction as well as the features and advantages of the invention will become apparent from the description set forth hereinafter when considered in conjunction with the accompanying drawings.

- Fig. 1 is a schematic view of a traditional disc packing box for keeping discs in it.
- Figs. 2A and 2B are perspective views of an unit of the invention showing the drawer is pushed into the outer case and pulled out of the outer case.
- Fig. 3A shows the separated elements of the invention.
- Figs. 3B and 3C are schematic views showing two boards of the invention to be jointed each other by the construction of tenon and mortise.
- Fig. 4 is a schematic view showing the sliding rail and groove of the invention to be fitted each other.
- Figs. 5A, 5B, 5C and 5D are the schematic views showing two different types of linking clips of the invention to combine two or more boxes into a whole piece.

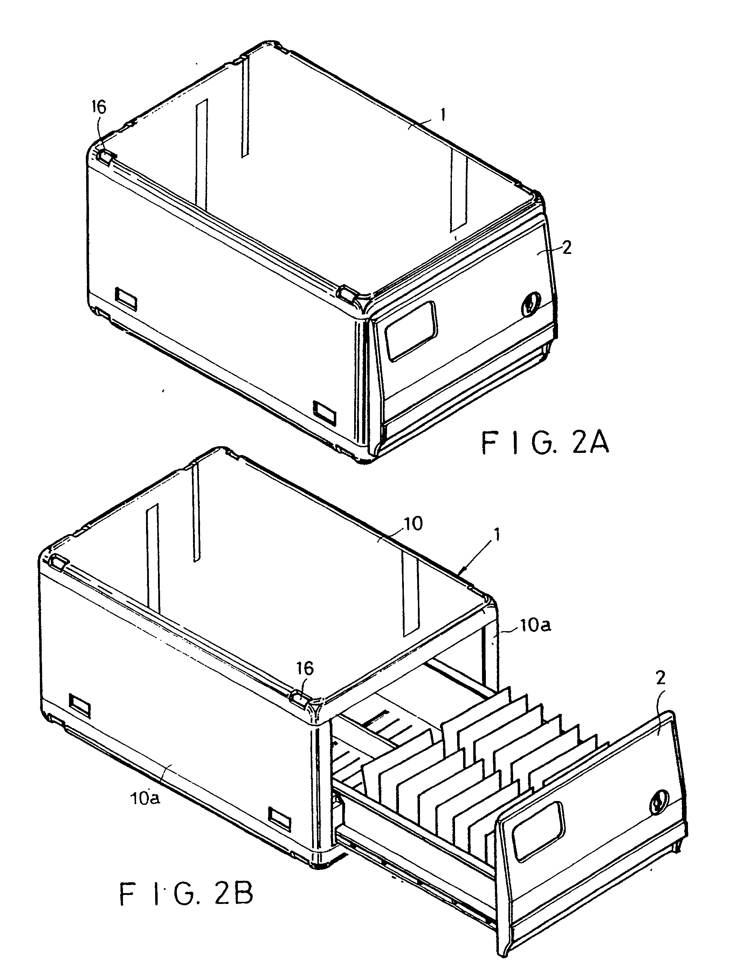

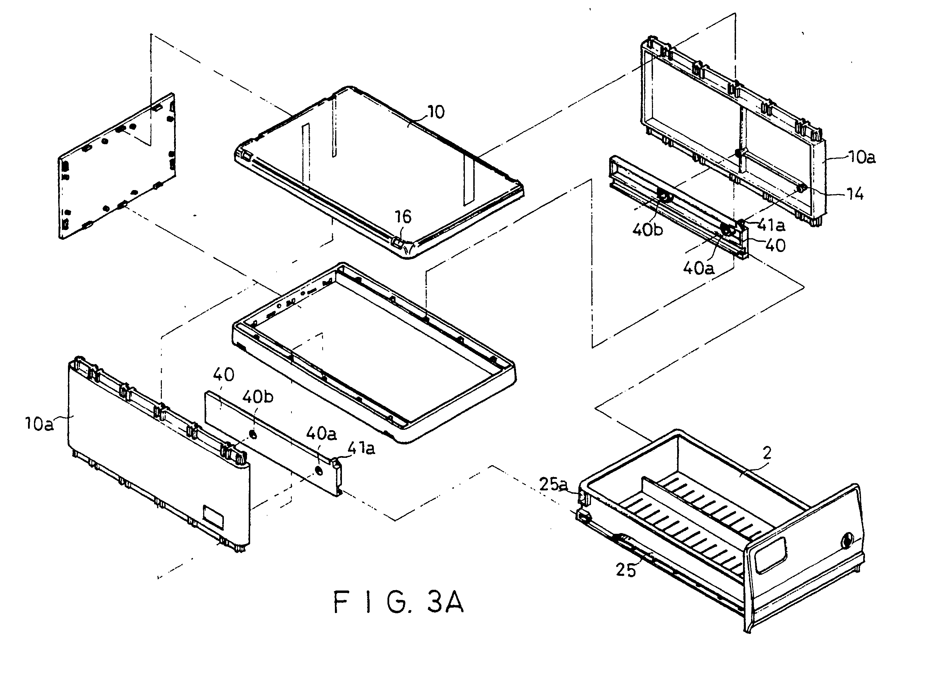

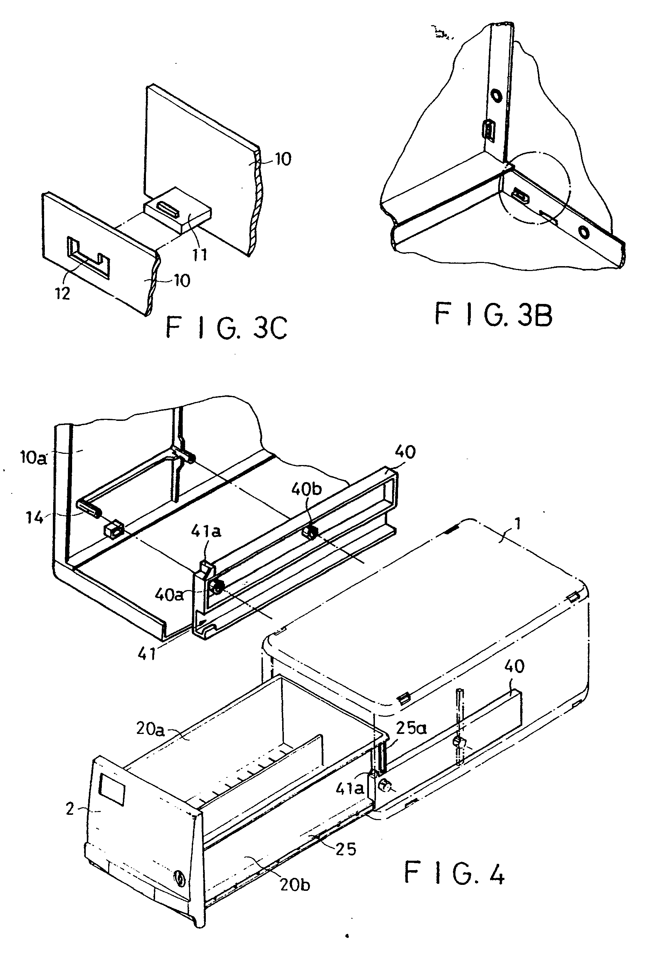

Referring to figure 1, the traditional packing box for keeping discs is neither safe nor neat or beautiful as we have described in the above. As shown in Figs. 2A, 2B and 3A, the invention of disc keeping box unit of the invention comprises an outer case 1 constructed by several boards 10 and an inner drawer 2. On the edges of each two boards can be adjacent together, there are several tenons 11 and mortises 12, as shown in figures 3B and 3C, then enable each of the two boards 10 to be jointed at the edges firmly.

As shown in figure 3A, there are protuberances 14 formed on the boards 10a act as the side boards of the outer case 1 to insert into the holes 40a, 40b of the sliding board 40, and then fix the sliding board 40 on the inner walls of the side boards 10a without using any screws.

In addition, as shown in figure 4, the inner drawer 2 has two sliding rails 25 at the lower edge of the outer wall of each of the side boards 20a, 20b respectively. The rails 25 are shaped to match with the sliding groove 41 of sliding boards 40. Besides, at the rear end of each of the rail 25 fixed on the side board of the drawer 2, there is a stopper 25a, at the bottom of the front end of the sliding groove 41 of each sliding board 40, there is a stopper 41a too. Thus, after the invention is assembled and make the rail 25 extended into the sliding groove 41 by means of the sliding rails 25 sliding to and fro in the sliding grooves 41 of the sliding boards 40 mounted on the inner side of the outer case 1, and the action of the stopper 25a and 41a, the inner drawer 2 as shown in figure 4 can be drawn out at its most without separating the outer case.

Referring to figures 2A, 2B and 3A again, the boards 10 formed the outer case have concaves at its edge, as a result when an outer case is assembled, the concaves would form slots 16 at the corner of the outer case 1.

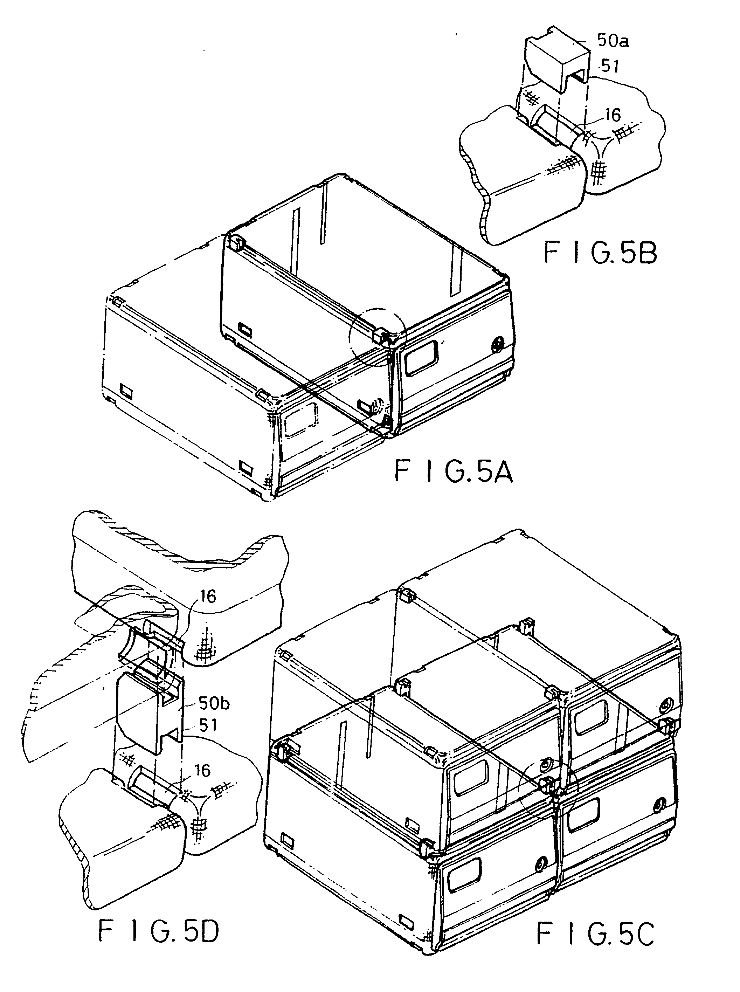

Moreover, as shown in figures 5B and 5D, there are two embodiments of the connecting clips 50a, 50b of the invention, wherein, the 50a is used to combine two disc keeping box units of the invention sited side by side, clip 50b is used to combine four box-units of the invention into two pairs and overlapping each other. The method to combine them is just inserting the two feet 51 of a single connecting clip 50a or 50b into the slots 16 formed at the corner of the outer case 1 of the disc keep box unit of the invention, by this way they can combine as a whole piece, as shown in figures 5A and 5C.

It will be understood that the assembly of the invention is easily without any tool, the inner drawer has rails which is durable and never be broken, moreover, it can joint several units into a whole piece.

Although the present invention has been described with a certain degree of particularity, the present disclosure has been made by way of example and changes in details of structure may be made without departing from the spirit thereof.

**Claims**

1. A disc keeping box, comprising: an outer case (1) formed by a left, a right, an upper, a lower and a rear boards (10), a sliding board (40) fixed onto each inner wall of the side boards (10a) of the outer case (1), and an inner drawer (2) can be pulled out and pushed into the outer case (1), characterized in that: the boards (10) forming the outer case (1) having tenons (11) and mortises (12), whereby the outer case (1) is assembled without using any tool or any fastener, on the inner side of each of the side boards (10a) of the outer case (1), there are protuberances (14); on each of the sliding boards (40), there are holes (40a, 40b) for mounting on the protuberances (14) formed on the side boards (10a) of the outer case (1); at the lower edge of each of the side boards (20a, 20b) of the inner drawer (2) there is a rail (25) to match with the groove (41) formed on the sliding board (40); besides, at the rear end of the rail (25) and the front end of each of the sliding boards (40), there is a stopper respectively (25a, 41a); in addition, there are a plurality of slots (16) formed at the corners of the outer case (1).

F I G. 1

F I G. 2A

F I G. 2B

F I G. 3A

EP 0 451 428 A1

F I G. 3C

F I G. 3B

F I G. 4

FIG.5A

FIG.5B

FIG.5C

FIG.5D

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 834 819 (FA. FRIEDRICH THEYSOHN)<br>* claims 1-6; figures * | 1 | G 11 B 33/04 |
| A | DE-B-1 131 026 (P.M.AMANN)<br>* column 5, lines 8 - 31; figures * | 1 | |
| A | CH-A-6 520 12 (PLASTON AG)<br>* abstract; figures * | 1 | |
| A | DE-A-3 106 511 (R.EICKEL)<br>* claims 1-17; figures * | 1 | |
| A | EP-A-0 208 062 (BASF AG)<br>* claims 1-5; figures * | 1 | |
| A | GB-A-2 116 020 (KARRIE INDUSTRIAL CO. LTD)<br>* claims 1-12; figures * | 1 | |
| A | US-A-2 676 861 (L.W.BELEW) | | |
| A | AU-B-4 923 86 (G.H.FISCHER ET AL) | | TECHNICAL FIELDS SEARCHED (Int. Cl.5) |
| A | EP-A-0 198 434 (KURZ KUNSTSTOFFE GMBH) | | G 11 B<br>A 47 B |
| A | EP-A-0 155 601 (RUDOLF WITTNER GMBH) | | |

The present search report has been drawn up for all claims

| Place of search | Date of completion of search | Examiner |
|---|---|---|
| The Hague | 18 December 90 | DECLAT M.G. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

 

& : member of the same patent family, corresponding
   document